# EUROPÄISCHE PATENTANMELDUNG

(11) **EP 3 366 788 A1**
(43) Veröffentlichungstag der Anmeldung: **29.08.2018**
(21) Anmeldenummer: 17157607.7
(22) Anmeldetag: 23.02.2017
(51) Int. Cl.: C21C 5/40, F27D 17/00

(54) **KÜHLMITTELFÜHRUNGSEINHEIT FÜR EINE KONVERTERABGASHAUBE**

(71) Anmelder: Primetals Technologies Austria GmbH, 4031 Linz (AT)
(72) Erfinder: Junger, Daniel, 5151 Nussdorf (AT)
(74) Vertreter: Metals@Linz

(57) **Zusammenfassung**

Die Erfindung betrifft eine Kühlmittelführungseinheit (14) für eine Konverterabgashaube (8), aufweisend eine Vorlaufrohrleitung (38) mit einem Kühlmitteleinlass (44) sowie eine fluidleitend mit der Vorlaufrohrleitung (38) verbundene Rücklaufrohrleitung (40) mit einem Kühlmittelauslass (46). Um eine aufwandsgünstige Herstellbarkeit einer Konverterabgashaube (8) zu ermöglichen, wird vorgeschlagen, dass die Vorlaufrohrleitung (38) und die Rücklaufrohrleitung (40) jeweils zwei zueinander parallele Längsabschnitte (48, 50) sowie einen schräg zu den Längsabschnitten (48, 50) ausgerichteten Zwischenabschnitt (52) aufweisen, durch welchen die Längsabschnitte (48, 50) der jeweiligen Rohrleitung (38, 40) fluidleitend miteinander verbunden sind, wobei die Längsabschnitte (48, 50) der Vorlaufrohrleitung (38) parallel zu den Längsabschnitten (48, 50) der Rücklaufrohrleitung (40) ausgerichtet sind.

Ferner betrifft die Erfindung eine Verwendung einer solchen Kühlmittelführungseinheit (14), eine Konverterabgashaube (8) mit einer solchen Kühlmittelführungseinheit (14) sowie eine metallurgische Anlage (2), welche eine Konverterabgashaube (8) mit einer solchen Kühlmittelführungseinheit (14) aufweist.

## Beschreibung

Die Erfindung betrifft eine Kühlmittelführungseinheit für eine Konverterabgashaube sowie eine Verwendung einer solchen Kühlmittelführungseinheit. Ferner betrifft die Erfindung eine Konverterabgashaube zum Kühlen von Konverterabgasen sowie eine metallurgische Anlage zur Stahlerzeugung.

Konverterabgashauben werden in metallurgischen Anlagen verwendet, um aus einem Konverter austretende Abgase (Konverterabgase) in einen Abgaskühlkamin zu führen. Bisher bekannte Konverterabgashauben weisen typischerweise eine Vielzahl miteinander verschweißter Kühlrohre auf, durch welche ein Kühlmittel geleitet wird, um die Konverterabgase zu kühlen.

Bei bisher bekannten Konverterabgashauben weisen die Kühlrohre typischerweise einen Vorlaufabschnitt mit Kühlmitteleinlass sowie einen Rücklaufabschnitt mit einem Kühlmittelauslass auf. Der Vorlaufabschnitt eines solchen Kühlrohrs dient dazu, ein in das Kühlrohr eintretendes Kühlmittel von seinem Kühlmitteleinlass bis zum unteren Rand der Konverterabgashaube zu führen, während der Rücklaufabschnitt dazu dient, das Kühlmittel vom unteren Rand der Konverterabgashaube bis zu dessen Kühlmittelauslass zu führen.

Ferner sind die Kühlrohre üblicherweise derart geformt, dass die Kühlrohre mit ihren Vorlaufabschnitten einen äußeren zylindrischen Teil der Konverterabgashaube ausbilden, während die Kühlrohre mit ihren Rücklaufabschnitten einen inneren konischen Teil der Konverterabgashaube ausbilden. Die Kühlrohre bilden dabei eine doppelwandige Struktur der Konverterabgashaube.

Ein typisches Kühlrohr einer Konverterabgashaube, durch welches ein solcher innerer konischer Teil und äußerer zylindrischer Teil der Konverterabgashaube ausgebildet wird, ist beispielsweise in der DE 31 06 791 A1 offenbart.

Die Herstellung solcher Kühlrohre ist aufwändig. Zudem ist das Zusammenschweißen solcher Kühlrohre aufwändig. Letzteres geht insbesondere auf die Form der Kühlrohre zurück, da in Axialrichtung der Konverterabgashaube gesehen die Form der Kühlrohre zu einem nicht konstanten Abstand zwischen den Rücklaufabschnitten benachbarter Kühlrohre führt. Außerdem ist bei solchen Kühlrohren die Inspektion und Wartung der Schweißnähte nur bedingt möglich.

Eine Aufgabe der Erfindung ist es, eine aufwandsgünstige Herstellbarkeit einer Konverterabgashaube und insbesondere eine aufwandsgünstige Herstellbarkeit einer eine Konverterabgashaube aufweisenden metallurgischen Anlage zu ermöglichen.

Diese Aufgabe wird erfindungsgemäß gelöst durch eine Kühlmittelführungseinheit nach Anspruch 1, durch eine Konverterabgashaube nach Anspruch 8, durch eine metallurgische Anlage nach Anspruch 14 und durch eine Verwendung nach Anspruch 15.

Vorteilhafte Weiterbildungen der erfindungsgemäßen Kühlmittelführungseinheit, der erfindungsgemäßen Konverterabgashaube, der erfindungsgemäßen metallurgische Anlage und der erfindungsgemäßen Verwendung sind jeweils Gegenstand der abhängigen Patentansprüche sowie der nachfolgenden Beschreibung.

Die erfindungsgemäße Kühlmittelführungseinheit für eine Konverterabgashaube weist eine Vorlaufrohrleitung mit einem Kühlmitteleinlass sowie eine fluidleitend mit der Vorlaufrohrleitung verbundene Rücklaufrohrleitung mit einem Kühlmittelauslass auf. Die Vorlaufrohrleitung und die Rücklaufrohrleitung weisen jeweils zwei zueinander parallele Längsabschnitte sowie einen schräg zu den Längsabschnitten ausgerichteten Zwischenabschnitt auf, durch welchen die Längsabschnitte der jeweiligen Rohrleitung fluidleitend miteinander verbunden sind. Außerdem sind die Längsabschnitte der Vorlaufrohrleitung parallel zu den Längsabschnitten der Rücklaufrohrleitung ausgerichtet.

Eine solche Kühlmittelführungseinheit ist aufwandsgünstig herstellbar. Insbesondere hinsichtlich ihrer Rohrbiegungen ist es möglich, die Kühlmittelführungseinheit aufwandgünstiger herzustellen als bisherige Kühlrohre für Konverterabgashauben.

Außerdem lassen sich solche Kühlmittelführungseinheiten aufwandsgünstig miteinander verschweißen. Beim Verschweißen solcher Kühlmittelführungseinheiten kann außerdem eine hohe Schweißqualität und folglich eine hohe Lebensdauer der Schweißnähte erreicht werden.

Werden solche Kühlmittelführungseinheiten anstelle bisheriger Kühlrohre bei einer Konverterabgashaube verwendet, ist es ferner möglich, die Konverterabgashaube bzw. eine die Konverterabgashaube aufweisende metallurgische Anlage aufwandsgünstig herzustellen.

Des Weiteren ermöglicht es die Verwendung solcher Kühlmittelführungseinheiten bei einer Konverterabgashaube, die Konverterabgashaube einwandig auszubilden. Dadurch kann eine gute Zugänglichkeit zu den Rohrleitungen der Kühlmittelführungseinheiten erreicht werden - sowohl von der Innenseite der Konverterabgashaube als auch von deren Außenseite, was wiederum Inspektionen und Wartung der Rohrleitungen erleichtert.

Eine Rohrleitung im Sinne der Erfindung kann eine durch ein einzelnes Rohr oder durch mehrere miteinander verbundene Rohre ausgebildete Leitung sein.

Die Formulierung "fluidleitend miteinander verbunden" ist dahingehend zu verstehen, dass zwei Rohrleitungen, die "fluidleitend miteinander verbunden" sind, derart miteinander verbunden sind, dass ein Fluid von einer dieser beiden Rohrleitungen in die andere dieser beiden Rohrleitungen strömen kann.

Vorteilhafterweise sind der einlassseitige Längsabschnitt der Vorlaufrohrleitung und der einlassseitige Längsabschnitt der Rücklaufrohrleitung gleich lang. Weiter ist es vorteilhaft, wenn der auslassseitige Längsabschnitt der Vorlaufrohrleitung und der auslassseitige Längsabschnitt der Rücklaufrohrleitung gleich lang sind. Des Weiteren ist der jeweilige Zwischenabschnitt bei beiden Rohrleitungen vorzugsweise gleich lang. Ferner können die Längsabschnitte der jeweiligen Rohrleitung länger als deren Zwischenabschnitt sein.

Bei einer bevorzugten Ausführung der Erfindung ist vorgesehen, dass die Längsabschnitte der Vorlaufrohrleitung einstückig mit dem Zwischenabschnitt der Vorlaufrohrleitung ausgebildet sind und/oder dass die Längsabschnitte der Rücklaufrohrleitung einstückig mit dem Zwischenabschnitt der Rücklaufrohrleitung ausgebildet sind.

Die Längsabschnitte und der Zwischenabschnitt der Vorlaufrohrleitung können zum Beispiel durch ein einzelnes gebogenes Rohr ausgebildet sein. Ferner können die Längsabschnitte und der Zwischenabschnitt der Rücklaufrohrleitung durch ein einzelnes gebogenes Rohr ausgebildet sein. Dadurch kann beispielsweise darauf verzichtet werden, die Längsabschnitte und den Zwischenabschnitt der jeweiligen Rohrleitung miteinander zu verschweißen.

Grundsätzlich können die Vorlaufrohrleitung und die Rücklaufrohrleitung einstückig miteinander ausgebildet sein. So können die Vorlaufrohrleitung und die Rücklaufrohrleitung beispielsweise unterschiedliche Teile desselben Rohrs sein. In bevorzugter Weise sind die Vorlaufrohrleitung und die Rücklaufrohrleitung nicht einstückig miteinander ausgebildet, sondern jeweils durch ein oder mehrere eigene Rohre ausgebildet. Dadurch kann die Kühlmittelführungseinheit mit aufwandsgünstigeren Rohrbiegungen realisiert werden.

Weiter kann die Kühlmittelführungseinheit mindestens ein Verbindungsstück, insbesondere ein U-förmig ausgebildetes Verbindungsstück, aufweisen, durch welches die Vorlaufrohrleitung und die Rücklaufrohrleitung fluidleitend miteinander verbunden sind.

Das Verbindungsstück kann beispielsweise stoffschlüssig mit der Vorlaufrohrleitung und/oder der Rücklaufrohrleitung verbunden sein, vorzugsweise am kühlmitteleinlassfernen Ende der Vorlaufrohrleitung und/oder am kühlmittelauslassfernen Ende der Rücklaufrohrleitung. Das Verbindungsstück kann insbesondere an die Vorlaufrohrleitung und/oder an die Rücklaufrohrleitung geschweißt sein.

Bei einer vorteilhaften Weiterbildung der Erfindung weist die Kühlmittelführungseinheit mindestens zwei zusätzliche Rohrleitungen auf. Diese können insbesondere identisch zueinander ausgebildet sein.

Die zusätzlichen Rohrleitungen weisen vorzugsweise jeweils zwei zueinander parallele Längsabschnitte sowie einen schräg zu den Längsabschnitten ausgerichteten Zwischenabschnitt auf, durch welchen die Längsabschnitte der jeweiligen zusätzlichen Rohrleitung fluidleitend miteinander verbunden sind.

Es ist vorteilhaft, wenn die zusätzlichen Rohrleitungen fluidleitend mit der Vorlaufrohrleitung sowie mit der Rücklaufrohrleitung verbunden sind. Ferner ist es vorteilhaft, wenn die Längsabschnitte der zusätzlichen Rohrleitungen parallel zu den Längsabschnitten der Vorlaufrohrleitung sowie der Rücklaufrohrleitung ausgerichtet sind.

Die zusätzlichen Rohrleitungen können einstückig miteinander ausgebildet sein. Insbesondere können die zusätzlichen Rohrleitungen unterschiedliche Teile desselben Rohrs sein. Alternativ können die zusätzlichen Rohrleitungen durch separate Rohre ausgebildet sein.

Vorzugsweise ist an eine der beiden zusätzlichen Rohrleitungen sowie an die Vorlaufrohrleitung ein erstes Verbindungsstück angeschweißt, über welches diese eine zusätzliche Rohrleitung fluidleitend mit der Vorlaufrohrleitung verbunden ist. Weiterhin ist es bevorzugt, wenn an die andere der beiden zusätzlichen Rohrleitungen sowie an die Rücklaufrohrleitung ein zweites Verbindungsstück angeschweißt ist, über welches diese andere zusätzliche Rohrleitung fluidleitend mit der Rücklaufrohrleitung verbunden ist. An die beiden zusätzlichen Rohrleitungen kann ein drittes Verbindungsstück angeschweißt sein, über welches die beiden zusätzlichen Rohrleitungen fluidleitend miteinander verbunden sind.

Das dritte Verbindungsstück ist vorzugsweise schräg zu den Längsabschnitten der zusätzlichen Rohrleitungen ausgerichtet. Des Weiteren kann das jeweilige Verbindungsstück insbesondere U-förmig ausgebildet sein.

Vorteilhafterweise sind die Vorlaufrohrleitung, die zusätzlichen Rohrleitungen und die Rücklaufrohrleitung entlang eines Kreisbogens nebeneinander angeordnet.

Des Weiteren weist die Vorlaufrohrleitung in bevorzugter Weise einen Kühlmitteleinlassabschnitt auf, an welchem sich der zuvor erwähnte Kühlmitteleinlass befindet. Der Kühlmitteleinlassabschnitt kann insbesondere schräg zu den Längsabschnitten der Vorlaufrohrleitung ausgerichtet sein.

Außerdem ist es bevorzugt, dass die Rücklaufrohrleitung einen Kühlmittelauslassabschnitt aufweist, an welchem sich der zuvor erwähnte Kühlmittelauslass befindet. Der Kühlmittelauslassabschnitt kann beispielsweise schräg zu den Längsabschnitten der Rücklaufrohrleitung ausgerichtet sein.

Besagte Rohrleitungen der Kühlmittelführungseinheit weisen vorzugsweise Stahl als Material auf. Insbesondere können die Rohrleitungen der Kühlmittelführungseinheit vollständig aus Stahl bestehen.

Eine erfindungsgemäße Verwendung der Kühlmittelführungseinheit sieht vor, die Kühlmittelführungseinheit als Element einer Abgasführung einer Konverterabgashaube zu verwenden.

Wie eingangs erwähnt, betrifft die Erfindung unter anderem eine Konverterabgashaube zum Kühlen von Konverterabgasen.

Die erfindungsgemäße Konverterabgashaube zum Kühlen von Konverterabgasen umfasst mehrere Kühlmittelführungseinheiten der oben beschrieben Art, also mehrere erfindungsgemäße Kühlmittelführungseinheiten.

Diese Kühlmittelführungseinheiten bilden eine Abgasführung der Konverterabgashaube. Das heißt, die Kühlmittelführungseinheiten dienen dazu, die zu kühlenden Konverterabgase zu führen. Anders ausgedrückt, die Kühlmittelführungseinheiten bilden eine abgasführende Wandung der Konverterabgashaube.

Die Kühlmittelführungseinheiten der Konverterabgashaube sind vorteilhafterweise miteinander verbunden, insbesondere stoffschlüssig miteinander verbunden. In bevorzugter Weise sind die Kühlmittelführungseinheiten der Konverterabgashaube miteinander verschweißt. Besonders bevorzugt ist es, wenn benachbarte Kühlmittelführungseinheiten entlang deren Längserstreckung miteinander verschweißt sind.

Die Konverterabgashaube weist in bevorzugter Weise eine Haubenachse auf, bezüglich welcher die Kühlmittelführungseinheiten axialsymmetrisch angeordnet sind. Mit anderen Worten, die Kühlmittelführungseinheiten der Konverterabgashaube sind vorzugsweise derart nebeneinander angeordnet, dass die Anordnung der Kühlmittelführungseinheiten eine Axialsymmetrie bezüglich der Haubenachse aufweist.

In einer bevorzugten Ausführung der Erfindung weist die Konverterabgashaube einen oberen abgasführenden Abschnitt sowie einen unteren abgasführenden Abschnitt auf. Außerdem weist die Konverterabgashaube vorteilhafterweise einen mittleren abgasführenden Abschnitt auf, durch welchen der obere und der untere abgasführende Abschnitt miteinander verbunden sind.

Der obere und der untere abgasführende Abschnitt sind vorzugsweise zylindrisch geformt. Weiter ist es vorteilhaft, wenn der untere abgasführende Abschnitt einen größeren Durchmesser aufweist als der obere abgasführende Abschnitt.

Der mittlere abgasführende Abschnitt kann zum Beispiel als konische Verjüngung ausgebildet sein. An seinem Übergang zum unteren abgasführenden Abschnitt weist der mittlere abgasführende Abschnitt vorzugsweise einen Durchmesser auf, der gleich dem Durchmesser des unteren abgasführenden Abschnitts ist. An seinem Übergang zum oberen abgasführenden Abschnitt weist der mittlere abgasführende Abschnitt vorzugsweise einen Durchmesser auf, der gleich dem Durchmesser des oberen abgasführenden Abschnitts ist.

Bei einer vorteilhaften Ausgestaltung der Erfindung ist vorgesehen, dass der obere abgasführende Abschnitt und der untere abgasführende Abschnitt durch die Längsabschnitte der Kühlmittelführungseinheiten ausgebildet sind. Der mittlere abgasführende Abschnitt ist vorteilhafterweise durch die Zwischenabschnitte der Kühlmittelführungseinheiten ausgebildet.

Gemäß einer bevorzugten Weiterbildung der Erfindung sind benachbarte Rohrleitungen der Kühlmittelführungseinheiten an der abgasführenden Innenseite der Konverterabgashaube miteinander verschweißt.

Die Formulierung "benachbarte Rohrleitungen der Kühlmittelführungseinheiten" kann sich sowohl auf benachbarte Rohrleitungen der jeweiligen Kühlmittelführungseinheit als auch auf benachbarte Rohrleitungen benachbarter Kühlmittelführungseinheiten beziehen. Mit anderen Worten, es können benachbarte Rohrleitungen derselben Kühlmittelführungseinheit und/oder benachbarte Rohrleitungen unterschiedlicher Kühlmittelführungseinheiten an der abgasführenden Innenseite miteinander verschweißt sein.

Benachbarte Rohrleitungen der Kühlmittelführungseinheiten können insbesondere beim oberen, mittleren und/oder unteren abgasführenden Abschnitt an der Innenseite der Konverterabgashaube miteinander verschweißt sein. An der Innenseite der Konverterabgashaube können Schweißnähte, die benachbarte Rohrleitungen miteinander verbinden, schmaler ausgeführt werden als an der Außenseite der Konverterabgashaube, was ein schnelleres und kostengünstigeres Verschweißen der Kühlmittelführungseinheiten sowie eine geringere Defektanfälligkeit der Schweißnähte ermöglicht.

Beim unteren abgasführenden Abschnitt können benachbarte Rohrleitungen der Kühlmittelführungseinheiten zusätzlich an einer Außenseite der Konverterabgashaube miteinander verschweißt sein, insbesondere mithilfe einer oder mehrerer Platten, welche an die Rohrleitungen angeschweißt ist/sind.

Des Weiteren kann die Konverterabgashaube mit einem Kühlmittelverteilerrohr ausgestattet sein. Vorzugsweise ist die jeweilige Kühlmittelführungseinheit an ihrem Kühlmitteleinlass mit dem Kühlmittelverteilerrohr verbunden. Darüber hinaus kann die Konverterabgashaube ein Kühlmittelsammlerrohr aufweisen. In bevorzugter Weise ist die jeweilige Kühlmittelführungseinheit an ihrem Kühlmittelauslass mit dem Kühlmittelsammlerrohr verbunden.

Die Erfindung betrifft außerdem, wie eingangs erwähnt, eine metallurgische Anlage zur Stahlerzeugung.

Die erfindungsgemäße metallurgische Anlage zur Stahlerzeugung weist einen Konverter auf. Zudem umfasst die erfindungsgemäße metallurgische Anlage eine Konverterabgashaube der oben beschriebenen Art, also die erfindungsgemäße Konverterabgashaube, zum Kühlen von aus dem Konverter austretenden Abgasen.

Der Konverter ist vorzugsweise ein basisch ausgekleideter Konverter, auch LD-Konverter genannt.

Die bisher gegebene Beschreibung vorteilhafter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit der erfindungsgemäßen Kühlmittelführungseinheit, der erfindungsgemäßen Konverterabgashaube, der erfindungsgemäßen metallurgischen Anlage sowie der erfindungsgemäßen Verwendung kombinierbar. Ferner können Verfahrensmerkmale auch als Eigenschaft der entsprechenden Vorrichtungseinheit gesehen werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung eines Ausführungsbeispiels der Erfindung, das im Zusammenhang mit den Zeichnungen näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale des Ausführungsbeispiels auch explizit isoliert betrachtet und mit einem beliebigen der Ansprüche kombiniert werden.

Es zeigen:
- FIG 1: eine Seitenansicht einer metallurgischen Anlage, welche einen Konverter, eine mehrere Kühlmittelführungseinheiten aufweisende Konverterabgashaube und einen höhenverstellbaren Schließring umfasst, wobei sich der Schließring in seiner niedrigsten Position befindet;
- FIG 2: eine Seitenansicht der metallurgischen Anlage aus FIG 1, wobei sich der Schließring in seiner höchsten Position befindet;
- FIG 3: eine Schnittdarstellung der Konverterabgashaube;
- FIG 4: eine 3D-Ansicht einer der Kühlmittelführungseinheiten der Konverterabgashaube aus einer ersten Perspektive;
- FIG 5: eine 3D-Ansicht der Kühlmittelführungseinheit aus FIG 4 aus einer zweiten Perspektive;
- FIG 6: eine Frontansicht besagter Kühlmittelführungseinheit;
- FIG 7: eine Draufsicht der Kühlmittelführungseinheit;
- FIG 8: vier nebeneinander angeordnete Rohrleitungen der Kühlmittelführungseinheit;
- FIG 9: einen vergrößerten Teilbereich der FIG 3;
- FIG 10: einen Schnitt durch die Konverterabgashaube entlang der Schnittebene X-X aus FIG 3;
- FIG 11: einen vergrößerten Teilbereich der FIG 10;
- FIG 12: einen Schnitt durch die zwei benachbarte Rohrleitungen der Konverterabgashaube entlang der Schnittebene XII-XII aus FIG 9;
- FIG 13: einen Schnitt durch dieselben benachbarten Rohrleitungen der Konverterabgashaube entlang der Schnittebene XIII-XIII aus FIG 9.

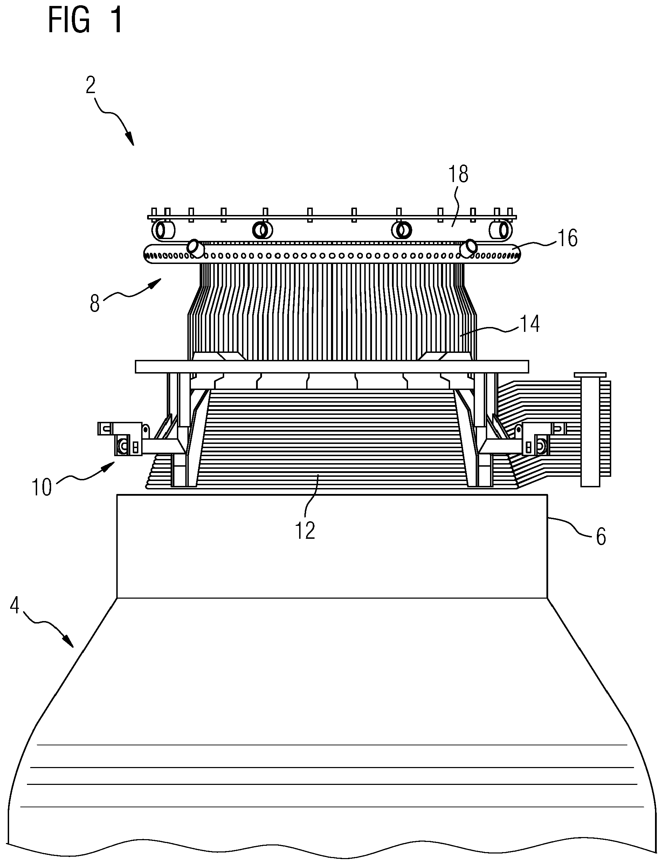

FIG 1 zeigt eine Seitenansicht einer metallurgischen Anlage 2 zur Stahlerzeugung. Die metallurgische Anlage 2 umfasst einen Konverter 4 mit einem Konvertermund 6. Bei dem Konverter 4 handelt es sich im vorliegenden Ausführungsbeispiel um einen sogenannten LD-Konverter.

Außerdem umfasst die metallurgische Anlage 2 eine Konverterabgashaube 8 und einen Schließring 10, die beide oberhalb des Konvertermunds 6 des Konverters 4 angeordnet sind. Die Konverterabgashaube 8 ist an einen figürlich nicht dargestellten Abgaskühlkamin der metallurgischen Anlage 2 angeschlossen.

Der Schließring 10 umfasst mehrere miteinander verbundene Rohrleitungen 12 zum Führen eines Kühlmittels, wobei der Schließring 10 eine Form aufweist, die sich nach oben konisch verjüngt. Ferner ist der Schließring 10 höhenverstellbar. Das heißt, der Schließring 10 kann seine Höhenposition relativ zu der Konverterabgashaube 8 verändern. In FIG 1 befindet sich der Schließring 10 in seiner niedrigstmöglichen Position. Außerdem umgibt der Schließring 10 die Konverterabgashaube 8 in deren Umfangsrichtung über einen Teil der Axialerstreckung der Konverterabgashaube 8.

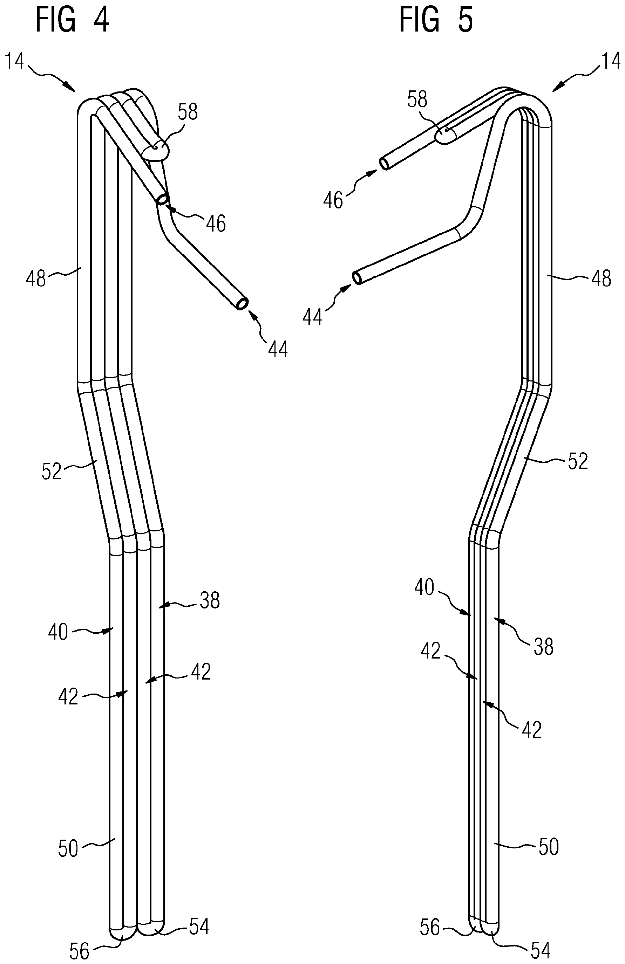

Besagte Konverterabgashaube 8 umfasst mehrere - im vorliegenden Ausführungsbeispiel vierundsechzig - miteinander verbundene Kühlmittelführungseinheiten 14, die von einem Kühlmittel durchströmbar sind (vgl. FIG 4 ff.). Diese Kühlmittelführungseinheiten 14 bilden eine Abgasführung der Konverterabgashaube 8. Benachbarte Kühlmittelführungseinheiten 14 sind jeweils entlang deren Längserstreckung miteinander verschweißt.

Weiterhin umfasst die Konverterabgashaube 8 ein ringförmiges Kühlmittelverteilerrohr 16 sowie ein ringförmiges Kühlmittelsammlerrohr 18, wobei die Kühlmittelführungseinheiten 14 einlassseitig mit dem Kühlmittelverteilerrohr 16 und auslassseitig mit dem Kühlmittelsammlerrohr 18 verbunden sind.

Des Weiteren ist die Konverterabgashaube 8 gemeinsam mit dem Schließring 10 horizontal verfahrbar.

Abgase, die beim Betrieb der metallurgischen Anlage 2 aus dem Konverter 4 austreten, werden über den Schließring 10 und die Konverterabgashaube 8 abgeleitet. Von einem Kühlmittel, welches durch die Rohrleitungen 12 des Schließrings 10 sowie durch die Kühlmittelführungseinheiten 14 der Konverterabgashaube 8 geleitet wird, wird Wärmeenergie von den Konverterabgasen aufgenommen, sodass die Konverterabgase gekühlt werden. Im vorliegenden Ausführungsbeispiel wird Wasser als Kühlmittel verwendet. Anstelle von Wasser kann beispielsweise auch ein Kühlmedium aus einem Wassergemisch oder einem WasserDampfgemisch verwendet werden.

Zusätzlich zu den zuvor erwähnten Elementen kann die metallurgische Anlage weitere (dem Fachmann bekannte) Elemente aufweisen, welche einer besseren Übersichtlichkeit halber figürlich nicht dargestellt sind.

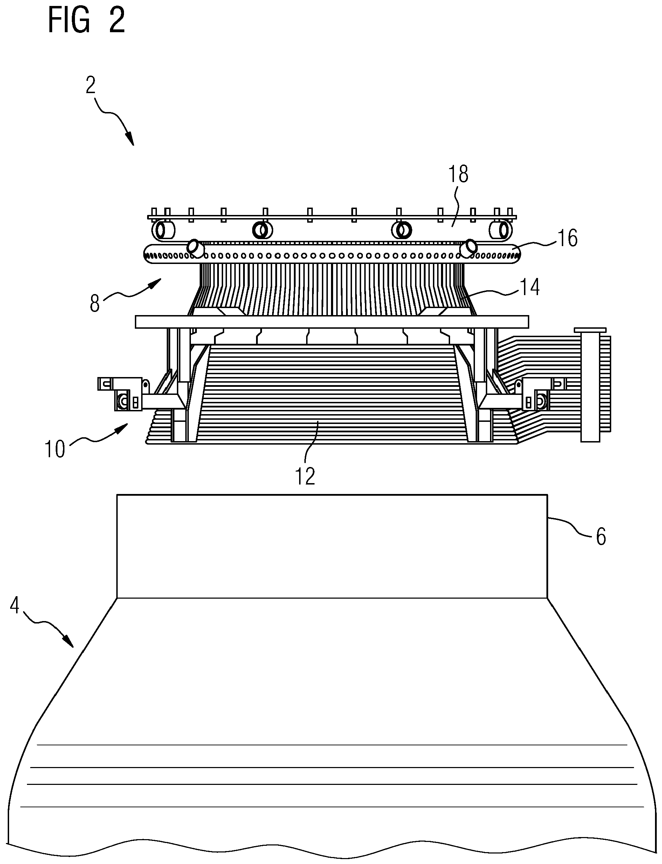

FIG 2 zeigt eine Seitenansicht der metallurgischen Anlage 2 aus FIG 1. In FIG 2 befindet sich der Schließring 10 jedoch in seiner höchstmöglichen Position.

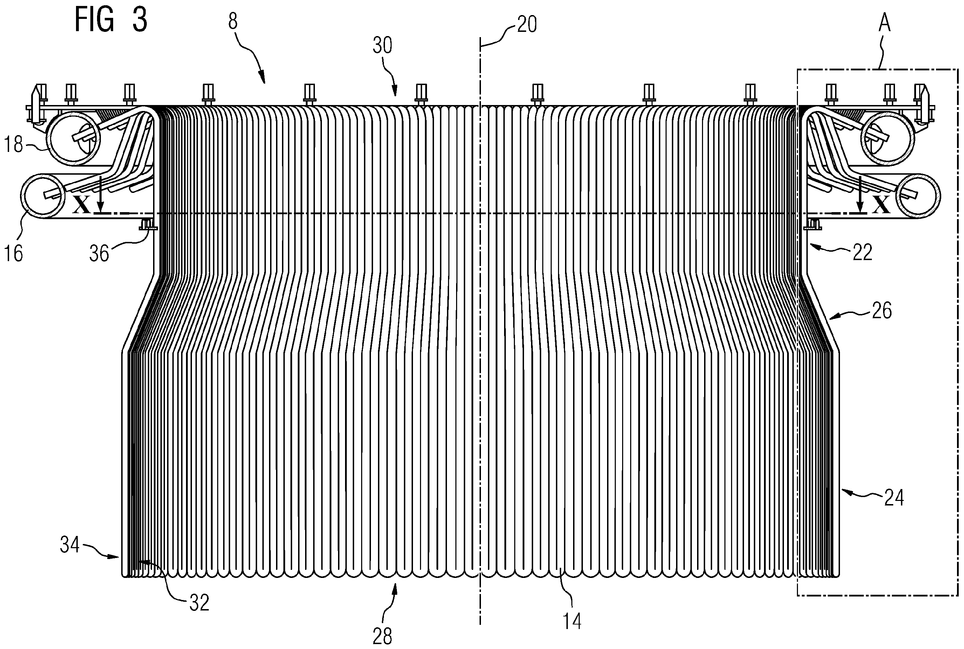

FIG 3 zeigt eine Schnittdarstellung der Konverterabgashaube 8, wobei die Schnittebene, auf die sich diese Schnittdarstellung bezieht, parallel zur Zeichenebene von FIG 1 und FIG 2 verläuft.

Die Konverterabgashaube 8 weist eine Haubenachse 20 auf, bezüglich welcher die Kühlmittelführungseinheiten 14 axialsymmetrisch nebeneinander angeordnet sind. Darüber hinaus weisen das Kühlmittelverteilerrohr 16 und das Kühlmittelsammlerrohr 18 eine Axialsymmetrie bezüglich der Haubenachse 20 auf.

Außerdem weist die Konverterabgashaube 8 einen zylindrischen oberen abgasführenden Abschnitt 22, einen zylindrischen unteren abgasführenden Abschnitt 24 sowie einen mittlere abgasführenden Abschnitt 26 auf. Die besagten abgasführenden Abschnitte 22, 24, 26 sind jeweils axialsymmetrisch bezüglich der Haubenachse 20.

Der untere abgasführende Abschnitt 24 weist einen größeren Durchmesser auf als der obere abgasführende Abschnitt 22. Außerdem sind der obere und der untere abgasführende Abschnitt 22, 24 durch den mittleren abgasführenden Abschnitt 26 miteinander verbunden, wobei der mittlere abgasführende Abschnitt 26 eine sich nach oben konisch verjüngende Form aufweist.

Wie aus FIG 3 ersichtlich ist, bilden die Kühlmittelführungseinheiten 14 mit ihrem jeweiligen unteren Ende einen Abgaseinlass 28 der Konverterabgashaube 8 und mit ihrem jeweiligen oberen Ende einen Abgasauslass 30 der Konverterabgashaube 8.

Beim oberen, mittleren und unteren abgasführenden Abschnitt 22, 24, 26 der Konverterabgashaube 8 sind benachbarte Rohrleitungen der Kühlmittelführungseinheiten 14 an der abgasführenden Innenseite 32 der Konverterabgashaube 8 miteinander verschweißt. Beim unteren abgasführenden Abschnitt 24 (nicht jedoch beim oberen und mittleren abgasführenden Abschnitt 22, 26) sind benachbarte Rohrleitungen der Kühlmittelführungseinheiten 14 zusätzlich an der Außenseite 34 der Konverterabgashaube 8 miteinander verschweißt.

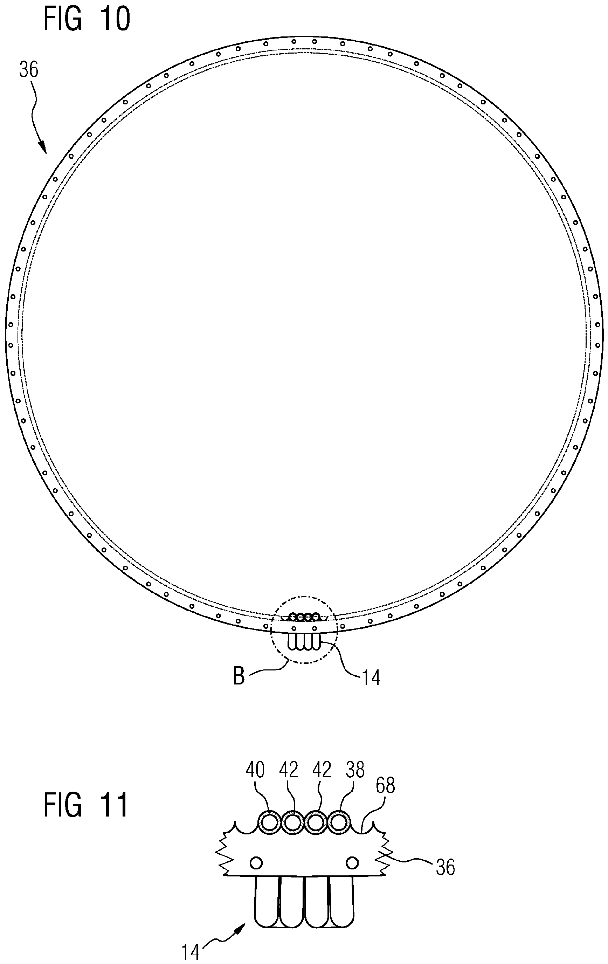

Des Weiteren ist in FIG 3 direkt oberhalb eines Versteifungsrings 36 der Konverterabgashaube 8 eine horizontale Schnittebene X-X eingezeichnet (vgl. Schnittdarstellung in FIG 10).

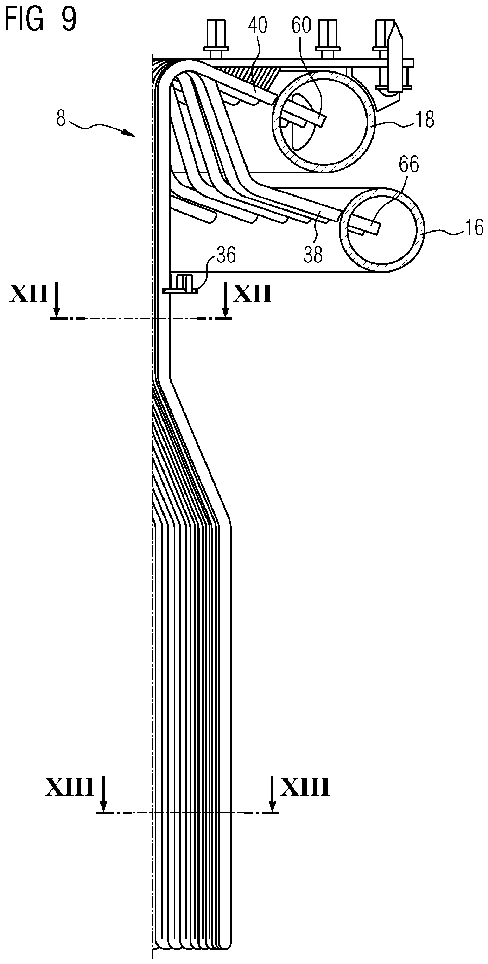

Weiterhin ist in FIG 3 ein Teilbereich A, welcher in FIG 9 vergrößert dargestellt ist, durch ein gestricheltes Rechteck kenntlich gemacht.

FIG 4 zeigt exemplarisch eine der Kühlmittelführungseinheiten 14 der Konverterabgashaube 8 in einer 3D-Ansicht.

Die Kühlmittelführungseinheit 14 ist von einem Fluid, wie zum Beispiel dem zuvor erwähnten Kühlmittel, durchströmbar und umfasst eine Vorlaufrohrleitung 38, eine Rücklaufrohrleitung 40 sowie zwei zusätzliche Rohrleitungen 42, wobei besagte Rohrleitungen 38, 40, 42 der Kühlmittelführungseinheit 14 fluidleitend miteinander verbunden sind. Im vorliegenden Ausführungsbeispiel bestehen die Rohrleitungen 38, 40, 42 aus Stahl. Außerdem weisen besagte Rohrleitungen 38, 40, 42 jeweils eine kreisrunde Querschnittsform auf.

Die Vorlaufrohrleitung 38 weist einen Kühlmitteleinlass 44 auf, durch welchen ein Fluid in die Kühlmittelführungseinheit 14 einströmen kann. Außerdem weist die Rücklaufrohrleitung 40 einen Kühlmittelauslass 46 auf, durch welchen ein Fluid aus der Kühlmittelführungseinheit 14 ausströmen kann.

Besagte Rohrleitungen 38, 40, 42 der Kühlmittelführungseinheit 14 weisen jeweils einen oberen Längsabschnitt 48, einen unteren Längsabschnitt 50 sowie einen die beiden Längsabschnitte 48, 50 miteinander verbindenden Zwischenabschnitt 52 auf. Der Zwischenabschnitt 52 der jeweiligen Rohrleitung 38, 40, 42 schließt einenends an den oberen Längsabschnitt 48 der jeweiligen Rohrleitung 38, 40, 42 an. Anderenends schließt der Zwischenabschnitt 52 der jeweiligen Rohrleitung 38, 40, 42 an den unteren Längsabschnitt 50 der jeweiligen Rohrleitung 38, 40, 42 an. Durch den Zwischenabschnitt 52 der jeweiligen Rohrleitung 38, 40, 42 werden deren oberer und unterer Längsabschnitt 48, 50 fluidleitend miteinander verbunden.

Alle Längsabschnitte 48, 50 sind parallel zueinander ausgerichtet und erstrecken sich in Axialrichtung der Konverterabgashaube 8, also parallel zur Haubenachse 20 (vgl. FIG 3). Der Zwischenabschnitt 52 der jeweiligen Rohrleitung 38, 40, 42 ist schräg zu den beiden Längsabschnitten 48, 50 der jeweiligen Rohrleitung 38, 40, 42 ausgerichtet.

Die Kühlmittelführungseinheit 14 weist ein erstes U-förmig ausgebildetes Verbindungsstück 54 auf, durch welches die Vorlaufrohrleitung 38 fluidleitend mit einer der beiden zusätzlichen Rohrleitungen 42 verbunden ist, wobei das erste Verbindungsstück 54 an die Vorlaufrohrleitung 38 und diese eine zusätzliche Rohrleitung 42 angeschweißt ist. Ferner weist die Kühlmittelführungseinheit 14 eine zweites U-förmig ausgebildetes Verbindungsstück 56 auf, durch welches die andere der beiden zusätzlichen Rohrleitungen 42 fluidleitend mit der Rücklaufrohrleitung 40 verbunden ist, wobei das zweite Verbindungsstück 56 an die Rücklaufrohrleitung 40 und die andere zusätzliche Rohrleitung 42 angeschweißt ist. Außerdem weist die Kühlmittelführungseinheit 14 ein drittes U-förmig ausgebildetes Verbindungsstück 58 auf, durch welches die beiden zusätzlichen Rohrleitungen 42 fluidleitend miteinander verbunden sind. Das dritte Verbindungsstück 58 ist an die beiden zusätzlichen Rohrleitungen 42 angeschweißt.

Über den Kühlmitteleinlass 44, der mit dem zuvor erwähnten Kühlmittelverteilerrohr 16 verbunden ist, strömt das zur Kühlung der Konverterabgase verwendete Kühlmittel in die Kühlmittelführungseinheit 14, genauer gesagt in deren Vorlaufrohrleitung 38, hinein. Vom Kühlmitteleinlass 44 strömt das Kühlmittel durch die Vorlaufrohrleitung 38 zum ersten Verbindungstück 54, in welchem die Kühlmittelströmung umgelenkt wird. Vom ersten Verbindungstück 54 strömt das Kühlmittel durch die beiden zusätzlichen Rohrleitungen 42 und das die beiden zusätzlichen Rohrleitungen 42 fluidleitend miteinander verbindende dritte Verbindungsstück 58 zum zweiten Verbindungsstück 56, in welchem die Kühlmittelströmung umgelenkt wird. Weiter strömt das Kühlmittel vom zweiten Verbindungsstück 56 durch die Rücklaufrohrleitung 40 zu deren Kühlmittelauslass 46. Über den Kühlmittelauslass 46, der mit dem zuvor erwähnten Kühlmittelsammlerrohr 18 verbunden ist, strömt das Kühlmittel aus der Kühlmittelführungseinheit 14 heraus.

Während das Kühlmittel durch besagte Rohrleitungen 38, 40, 42 der Kühlmittelführungseinheit 14 strömt, nimmt es Wärmeenergie von den Konverterabgasen auf.

Die obigen Ausführungen, die sich auf die Kühlmittelführungseinheit 14 aus FIG 4 beziehen, gelten entsprechend für die anderen Kühlmittelführungseinheiten 14 der Konverterabgashaube 8.

Der zuvor erwähnte zylindrische obere abgasführende Abschnitt 22 der Konverterabgashaube 8 wird durch die oberen Längsabschnitte 48 der Kühlmittelführungseinheiten 14 ausgebildet, während der zuvor erwähnte zylindrische untere abgasführende Abschnitt 24 der Konverterabgashaube 8 durch die unteren Längsabschnitte 50 der Kühlmittelführungseinheiten 14 ausgebildet wird. Der mittlere abgasführende Abschnitt 26 der Konverterabgashaube 8 wiederum wird durch die Zwischenabschnitte 52 der Kühlmittelführungseinheiten 14 ausgebildet.

FIG 5 bis FIG 7 zeigen weitere Ansichten der Kühlmittelführungseinheit 14 aus FIG 4.

So zeigt FIG 5 eine weitere 3D-Ansicht der Kühlmittelführungseinheit 14, jedoch aus einer anderen Perspektive als in FIG 4.

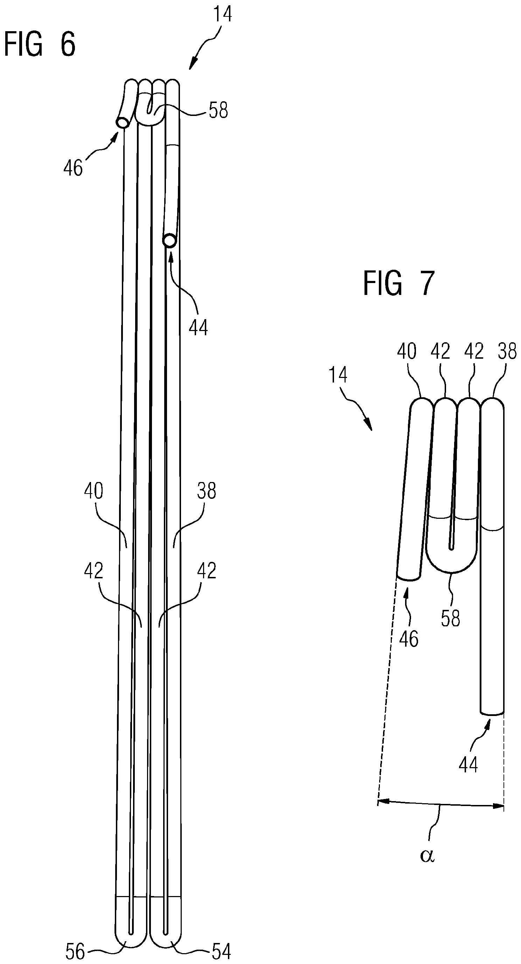

FIG 6 hingegen zeigt eine Frontansicht der Kühlmittelführungseinheit 14.

FIG 7 wiederum zeigt eine Draufsicht der Kühlmittelführungseinheit 14.

Besonders aus FIG 7 ist ersichtlich, dass die Vorlaufrohrleitung 38, die beiden zusätzlichen Rohrleitungen 42 und die Rücklaufrohrleitung 40 der Kühlmittelführungseinheit 14 entlang eines Kreisbogens nebeneinander angeordnet sind.

Der Mittelpunktswinkel α des durch die Vorlaufrohrleitung 38 und die Rücklaufrohrleitung 40 begrenzten Kreisbogens beträgt im vorliegenden Ausführungsbeispiel 5,625°, wobei sich der Mittelpunktswinkel α aus dem Quotienten von 360° und der Anzahl der Kühlmittelführungseinheiten 14 der Konverterabgashaube 8 - im vorliegenden Beispiel vierundsechzig - ergibt.

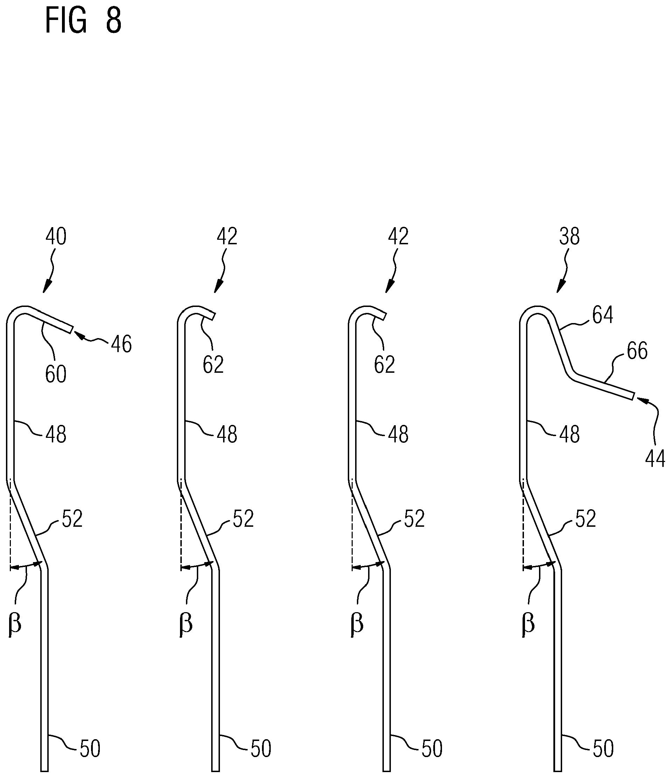

FIG 8 zeigt die Vorlaufrohrleitung 38, die Rücklaufrohrleitung 40 und die beiden zusätzlichen Rohrleitungen 42 der Kühlmittelführungseinheit 14 aus FIG 4 bis FIG 7, wobei besagte Rohrleitungen 38, 40, 42 räumlich voneinander getrennt dargestellt sind.

Wie zuvor erwähnt, weisen die Vorlaufrohrleitung 38, die Rücklaufrohrleitung 40 und die beiden zusätzlichen Rohrleitungen 42 jeweils einen oberen Längsabschnitt 48, einen Zwischenabschnitt 52 und einen unteren Längsabschnitt 50 auf, wobei der Zwischenabschnitt 52 der jeweiligen Rohrleitung 38, 40, 42 schräg zu den beiden Längsabschnitten 48, 50 der jeweiligen Rohrleitung 38, 40, 42 ausgerichtet ist. Im vorliegenden Ausführungsbeispiel ist der Zwischenabschnitt 52 der jeweiligen Rohrleitung 38, 40, 42 in einem Winkel β von 22° zu den Längsabschnitten 48, 50 der jeweiligen Rohrleitung 38, 40, 42 ausgerichtet.

Die Rücklaufrohrleitung 40 weist außer ihren beiden Längsabschnitten 48, 50 und ihrem Zwischenabschnitt 52 auch noch einen an den oberen Längsabschnitt 48 anschließenden Kühlmittelauslassabschnitt 60 auf, an welchem sich der Kühlmittelauslass 46 befindet, wobei besagte Abschnitte 48, 50, 52, 60 der Rücklaufrohrleitung 40 einstückig miteinander ausgebildet sind.

Die jeweilige zusätzliche Rohrleitung 42 weist außer ihren beiden Längsabschnitten 48, 50 und ihrem Zwischenabschnitt 52 auch noch einen an den oberen Längsabschnitt 48 anschließenden Umlenkabschnitt 62 auf, an welchen das dritte Verbindungsstück 58 angeschweißt wird, wobei besagte Abschnitte 48, 50, 52, 62 der jeweiligen zusätzlichen Rohrleitung 42 einstückig miteinander ausgebildet sind.

Sowohl die Rücklaufrohrleitung 40 als auch die beiden zusätzliche Rohrleitungen 42 sind jeweils durch ein einzelnes gebogenes Rohr ausgebildet, dessen Biegungen die besagten Abschnitte 48, 50, 52, 60 der Rücklaufrohrleitung 40 bzw. die besagten Abschnitte 48, 50, 52, 62 der jeweiligen zusätzlichen Rohrleitung 42 begrenzen.

Weiter weist die Vorlaufrohrleitung 38 außer ihren beiden Längsabschnitten 48, 50 und ihrem Zwischenabschnitt 52 auch noch einen an den oberen Längsabschnitt 48 anschließenden Umlenkabschnitt 64 sowie einen Kühlmitteleinlassabschnitt 66 auf. Die Längsabschnitte 48, 50, der Zwischenabschnitt 52 und der Umlenkabschnitt 66 der Vorlaufrohrleitung 38 sind einstückig miteinander ausgebildet, und zwar durch ein einzelnes gebogenes Rohr. Der Kühlmitteleinlassabschnitt 66, an welchem sich der Kühlmitteleinlass 44 befindet, ist im vorliegenden Ausführungsbeispiel als separates Rohr ausgebildet und ist an den Umlenkabschnitt 64 der Vorlaufrohrleitung 38 angeschweißt.

FIG 9 zeigt eine vergrößerte Darstellung des Teilbereichs A aus FIG 3.

Aus FIG 9 ist ersichtlich, dass der Kühlmitteleinlassabschnitt 66 der jeweiligen Vorlaufrohrleitung 38 in das Kühlmittelverteilerrohr 16 eingesetzt ist, während der Kühlmittelauslassabschnitt 60 der jeweiligen Rücklaufrohrleitung 40 in das Kühlmittelsammlerrohr 18 eingesetzt ist.

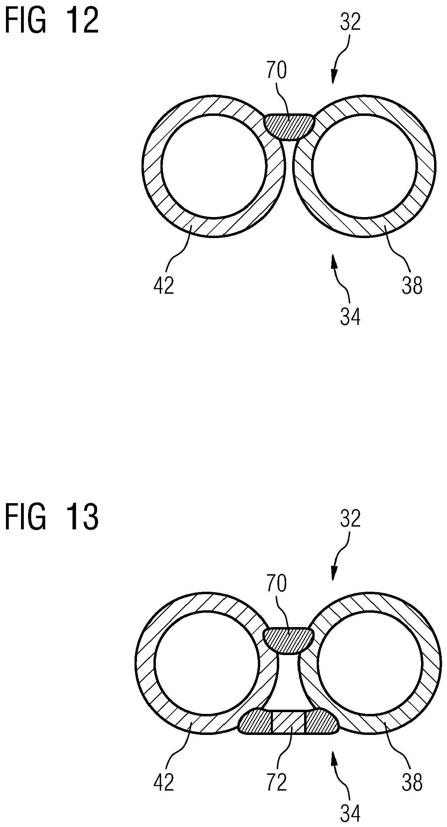

Weiterhin ist in FIG 9 im Bereich des oberen abgasführenden Abschnitts 22 der Konverterabgashaube 8 eine Schnittebene XII-XII eingezeichnet (vgl. Schnittdarstellung in FIG 12). Zudem ist im Bereich des unteren abgasführenden Abschnitts 24 eine weitere Schnittebene XIII-XIII eingezeichnet (vgl. Schnittdarstellung in FIG 13).

FIG 10 zeigt einen Schnitt durch die Konverterabgashaube 8 entlang der Schnittebene X-X aus FIG 3.

In dieser Schnittdarstellung ist der zuvor erwähnte Versteifungsring 36 erkennbar, welcher den oberen abgasführenden Abschnitt 22 in Umfangsrichtung des oberen abgasführenden Abschnitts 22 umschließt. Der Versteifungsring 36 dient, wie sein Name bereits impliziert, zur Versteifung der Konverterabgashaube 8, genauer gesagt zur Versteifung ihres oberen abgasführenden Abschnitts 22.

Einer besseren Übersichtlichkeit ist in FIG 10 nur eine der Kühlmittelführungseinheiten 14 der Konverterabgashaube 8 exemplarisch dargestellt.

Weiterhin ist in FIG 10 ein Teilbereich B, welcher in FIG 11 vergrößert dargestellt ist, durch einen gestrichelten Kreis kenntlich gemacht. In diesem Teilbereich B befindet sich die einzige in FIG 10 abgebildete Kühlmittelführungseinheit 14 der Konverterabgashaube 8.

FIG 11 zeigt eine vergrößerte Darstellung des Teilbereichs B aus FIG 10.

Aus FIG 11 ist ersichtlich, dass der Versteifungsring 36 an seinem Innenumfang nebeneinander angeordnete halbkreisförmige Aussparungen 68 aufweist, in die jeweils eine der Rohrleitungen 38, 40, 42 der Kühlmittelführungseinheiten 14 eingesetzt ist.

FIG 12 zeigt einen Schnitt durch zwei benachbarte Rohrleitungen der Konverterabgashaube 8 entlang der Schnittebene XII-XII aus FIG 9, also einen Schnitt im Bereich des oberen abgasführenden Abschnitts 22 der Konverterabgashaube 8.

Bei den beiden in FIG 12 dargestellten Rohrleitungen handelt es sich exemplarisch um eine Vorlaufrohrleitung 38 und die benachbarte zusätzliche Rohrleitung 42 derselben Kühlmittelführungseinheit 14. Wie aus FIG 12 ersichtlich ist, sind diese beiden Rohrleitungen 38, 42 im Bereich des oberen abgasführenden Abschnitts 22 der Konverterabgashaube 8 an der Innenseite 32 der Konverterabgashaube 8 mittels einer Schweißnaht 70 miteinander verbunden.

FIG 13 zeigt Schnitt durch dieselben beiden Rohrleitungen 38, 42 der Konverterabgashaube 8 entlang der Schnittebene XIII-XIII aus FIG 9, also einen Schnitt im Bereich des unteren abgasführenden Abschnitts 24 der Konverterabgashaube 8.

Wie aus FIG 13 ersichtlich ist, sind die beiden Rohrleitungen 38, 42 im Bereich des unteren abgasführenden Abschnitts 24 der Konverterabgashaube 8 ebenfalls an der Innenseite 32 der Konverterabgashaube 8 mittels einer Schweißnaht 70 miteinander verbunden. Zusätzlich sind die beiden Rohrleitungen 38, 42 im Bereich des unteren abgasführenden Abschnitts 24 an der Außenseite 34 der Konverterabgashaube 8 mittels einer Platte 72 miteinander verschweißt.

Alle benachbarten Rohrleitungen der Kühlmittelführungseinheiten 14 - das heißt, sowohl benachbarte Rohrleitungen derselben Kühlmittelführungseinheit 14 als auch benachbarte Rohrleitungen benachbarter Kühlmittelführungseinheiten 14 - sind jeweils entlang deren Längserstreckung miteinander verschweißt. Die Schweißverbindungen sämtlicher Rohrleitungen der Kühlmittelführungseinheiten 14 sind analog zu den Schweißverbindungen der beiden in FIG 12 und FIG 13 dargestellten Rohrleitungen 38, 42 ausgebildet.

Durch die zuvor beschriebene Ausgestaltung der Kühlmittelführungseinheiten 14 ist die Konverterabgashaube 8 aufwandsgünstig herstellbar. Insbesondere sind bei der Konverterabgashaube 8 aufgrund der zuvor beschriebenen Ausgestaltung der Kühlmittelführungseinheiten 14 weniger Schweißnähte erforderlich als bei bisherigen Konverterabgashauben. Durch die gute Zugänglichkeit zu den Rohrleitungen 38, 40, 42 der Kühlmittelführungseinheiten 14 - sowohl von der Innenseite 32 als auch von der Außenseite 34 der Konverterabgashaube 8 - lassen sich die Schweißnähte zudem aufwandsgünstig inspizieren (und prüfen). Außerdem kann die Konverterabgashaube 8 insgesamt mit weniger Material und folglich auch mit geringerem Gewicht und Schweißverzug hergestellt werden als bisherige Konverterabgashauben.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können hieraus abgeleitet werden, ohne den Schutzumfang der Erfindung zu verlassen.

### Bezugszeichenliste

- 2: metallurgische Anlage
- 4: Konverter
- 6: Konvertermund
- 8: Konverterabgashaube
- 10: Schließring
- 12: Rohrleitung
- 14: Kühlmittelführungseinheit
- 16: Kühlmittelverteilerrohr
- 18: Kühlmittelsammlerrohr
- 20: Haubenachse
- 22: oberer abgasführender Abschnitt
- 24: unterer abgasführender Abschnitt
- 26: mittlerer abgasführender Abschnitt
- 28: Abgaseinlass
- 30: Abgasauslass
- 32: Innenseite
- 34: Außenseite
- 36: Versteifungsring
- 38: Vorlaufrohrleitung
- 40: Rücklaufrohrleitung
- 42: zusätzliche Rohrleitung
- 44: Kühlmitteleinlass
- 46: Kühlmittelauslass
- 48: oberer Längsabschnitt
- 50: unterer Längsabschnitt
- 52: Zwischenabschnitt
- 54: erstes Verbindungsstück
- 56: zweites Verbindungsstück
- 58: drittes Verbindungsstück
- 60: Kühlmittelauslassabschnitt
- 62: Umlenkabschnitt
- 64: Umlenkabschnitt
- 66: Kühlmitteleinlassabschnitt
- 68: Aussparung
- 70: Schweißnaht
- 72: Platte
- α: Mittelpunktswinkel
- β: Winkel

## Patentansprüche

1. Kühlmittelführungseinheit (14) für eine Konverterabgashaube (8), aufweisend eine Vorlaufrohrleitung (38) mit einem Kühlmitteleinlass (44) sowie eine fluidleitend mit der Vorlaufrohrleitung (38) verbundene Rücklaufrohrleitung (40) mit einem Kühlmittelauslass (46),
**dadurch gekennzeichnet, dass** die Vorlaufrohrleitung (38) und die Rücklaufrohrleitung (40) jeweils zwei zueinander parallele Längsabschnitte (48, 50) sowie einen schräg zu den Längsabschnitten (48, 50) ausgerichteten Zwischenabschnitt (52) aufweisen, durch welchen die Längsabschnitte (48, 50) der jeweiligen Rohrleitung (38, 40) fluidleitend miteinander verbunden sind, wobei die Längsabschnitte (48, 50) der Vorlaufrohrleitung (38) parallel zu den Längsabschnitten (48, 50) der Rücklaufrohrleitung (40) ausgerichtet sind.

2. Kühlmittelführungseinheit (14) nach Anspruch 1,
**dadurch gekennzeichnet, dass** die Längsabschnitte (48, 50) der Vorlaufrohrleitung (38) einstückig mit dem Zwischenabschnitt (52) der Vorlaufrohrleitung (38) ausgebildet sind und/oder dass die Längsabschnitte (48, 50) der Rücklaufrohrleitung (40) einstückig mit dem Zwischenabschnitt (52) der Rücklaufrohrleitung (40) ausgebildet sind.

3. Kühlmittelführungseinheit (14) nach Anspruch 1 oder 2, **gekennzeichnet durch** mindestens ein U-förmig ausgebildetes Verbindungsstück (54, 56, 58), **durch** welches die Vorlaufrohrleitung (38) und die Rücklaufrohrleitung (40) fluidleitend miteinander verbunden sind.

4. Kühlmittelführungseinheit (14) nach Anspruch 3,
**dadurch gekennzeichnet, dass** das Verbindungsstück (54, 56, 58) an die Vorlaufrohrleitung (38) und/oder an die Rücklaufrohrleitung (40) geschweißt ist.

5. Kühlmittelführungseinheit (14) nach einem der vorhergehenden Ansprüche,
**gekennzeichnet durch** zwei zusätzliche Rohrleitungen (42), die jeweils zwei zueinander parallele Längsabschnitte (48, 50) sowie einen schräg zu den Längsabschnitten (48, 50) ausgerichteten Zwischenabschnitt (52) aufweisen, **durch** welchen die Längsabschnitte (48, 50) der jeweiligen zusätzlichen Rohrleitung (42) fluidleitend miteinander verbunden sind, wobei die zusätzlichen Rohrleitungen (42) fluidleitend mit der Vorlaufrohrleitung (38) sowie mit der Rücklaufrohrleitung (40) verbunden sind und die Längsabschnitte (48, 50) der zusätzlichen Rohrleitungen (42) parallel zu den Längsabschnitten (48, 50) der Vorlaufrohrleitung (38) sowie der Rücklaufrohrleitung (40) ausgerichtet sind.

6. Kühlmittelführungseinheit (14) nach Anspruch 5,
**dadurch gekennzeichnet, dass** an eine der beiden zusätzlichen Rohrleitungen (42) sowie an die Vorlaufrohrleitung (38) ein erstes Verbindungsstück (54) angeschweißt ist, über welches diese eine zusätzliche Rohrleitung (42) fluidleitend mit der Vorlaufrohrleitung (38) verbunden ist, an die andere der beiden zusätzlich Rohrleitungen (42) sowie an die Rücklaufrohrleitung (40) ein zweites Verbindungsstück (56) angeschweißt ist, über welches diese andere zusätzliche Rohrleitung (42) fluidleitend mit der Rücklaufrohrleitung (40) verbunden ist, und an die beiden zusätzlichen Rohrleitungen (42) ein drittes Verbindungsstück (58) angeschweißt ist, über welches die beiden zusätzlichen Rohrleitungen (42) fluidleitend miteinander verbunden sind.

7. Kühlmittelführungseinheit (14) nach Anspruch 5 oder 6,
**dadurch gekennzeichnet, dass** die Vorlaufrohrleitung (38), die zusätzlichen Rohrleitungen (42) und die Rücklaufrohrleitung (40) entlang eines Kreisbogens nebeneinander angeordnet sind.

8. Konverterabgashaube (8) zum Kühlen von Konverterabgasen, aufweisend mehrere Kühlmittelführungseinheiten (14) nach einem der vorhergehenden Ansprüche, wobei die Kühlmittelführungseinheiten (14) eine Abgasführung der Konverterabgashaube (8) bilden.

9. Konverterabgashaube (8) nach Anspruch 8,
**gekennzeichnet durch** eine Haubenachse (20), bezüglich welcher die Kühlmittelführungseinheiten (14) axialsymmetrisch angeordnet sind.

10. Konverterabgashaube (8) nach Anspruch 8 oder 9, **gekennzeichnet durch** einen zylindrisch geformten oberen abgasführenden Abschnitt (22), einen zylindrisch geformten unteren abgasführenden Abschnitt (24) sowie einen mittleren abgasführenden Abschnitt (26), **durch** welchen der obere und der untere abgasführenden Abschnitt (22, 24) miteinander verbunden sind, wobei der untere abgasführende Abschnitt (24) einen größeren Durchmesser aufweist als der obere abgasführende Abschnitt (22) und der mittlere abgasführende Abschnitt (26) als konische Verjüngung ausgebildet ist.

11. Konverterabgashaube (8) nach Anspruch 10,
**dadurch gekennzeichnet, dass** der obere abgasführende Abschnitt (22) und der untere abgasführende Abschnitt (24) durch die Längsabschnitte (48, 50) der Kühlmittelführungseinheiten (14) ausgebildet sind und der mittlere abgasführende Abschnitt (26) durch die Zwischenabschnitte (52) der Kühlmittelführungseinheiten (14) ausgebildet ist.

12. Konverterabgashaube (8) nach einem der Ansprüche 8 bis 11,
**dadurch gekennzeichnet, dass** benachbarte Rohrleitungen (38, 40, 42) der Kühlmittelführungseinheiten (14) an einer abgasführenden Innenseite (32) der Konverterabgashaube (8) miteinander verschweißt sind.

13. Konverterabgashaube (8) nach einem der Ansprüche 8 bis 12,
**gekennzeichnet durch** ein Kühlmittelverteilerrohr (16) und ein Kühlmittelsammlerrohr (18), wobei die jeweilige Kühlmittelführungseinheit (14) an ihrem Kühlmitteleinlass (44) mit dem Kühlmittelverteilerrohr (16) verbunden ist und an ihrem Kühlmittelauslass (46) mit dem Kühlmittelsammlerrohr (18) verbunden ist.

14. Metallurgische Anlage (2) zur Stahlerzeugung, aufweisend einen Konverter (4), insbesondere einen LD-Konverter, sowie eine Konverterabgashaube (8) nach einem der Ansprüche 8 bis 13 zum Kühlen von aus dem Konverter (4) austretenden Abgasen.

15. Verwendung einer Kühlmittelführungseinheit (14) nach einem der Ansprüche 1 bis 7 als Element einer Abgasführung einer Konverterabgashaube (8).
